# EUROPEAN PATENT APPLICATION

(11) **EP 3 719 763 A1**
(43) Date of publication of application: **07.10.2020**
(21) Application number: 20167589.9
(22) Date of filing: 01.04.2020
(51) Int. Cl.: G07C 9/25, G07C 9/28, G06Q 20/40

(54) **METHOD AND SYSTEM FOR MONITORING ACCESSES OF A USER IN A MONITORED AREA**

(30) Priority: 02.04.2019 IT 201900004946
(71) Applicant: Nicolussi-Rossi Stefano 4Peak Consulting, 39057 Appiano sulla Strada del Vino BZ (IT)
(72) Inventor: Nicolussi Rossi, Stefano, 39057 Appiano sulla Strada del Vino BZ (IT)
(74) Representative: Manfrin, Marta

(57) **Abstract**

The present disclosure concerns a method and an access monitoring system (100) of users in possession of a ticket (30) associated with a user identification in a monitored area through a gate assembly (10). The access monitoring method comprises a step of determining an attempt to access the gate assembly (10) of the access monitoring system to the monitored area by detecting a user identification associated with a ticket (300) of a user approaching the gate assembly by means of a ticket monitoring device (2). In the event of a first access of the user to the monitored area, the method involves taking a reference picture of the user, sending and saving this picture in a management unit (20). Following this phase, the passage assembly (10) is opened. In the case of an access of the user to the monitored area successive the first access, the method involves taking a monitoring picture of the user and comparing this monitoring picture with the reference picture saved in the management unit (20). In the event that these pictures match, the gate assembly (10) is opened.

## Description

The present disclosure refers in general to a method and system for monitoring user access to a monitored area. More in detail, the present disclosure refers to a method and system for access monitoring of users through a gate assembly to a ski resort or a sports facility in general.

In many activities, user access to a monitored or protected area involves the purchase of a ticket, at appropriate ticket office, by a user. In many cases, these tickets include an integrated Near-Field Communication (NFC) chip. Once the ticket has been purchased, users pass through an access gate to this monitored area, where checks are carried out to verify the validity of the ticket purchased. Generally, these gates include an NFC reader to which users must approach the ticket to enter the monitored area.

A typical example is that of ski areas. These areas generally comprise a plurality of ski resorts, each of which includes a gate, for example a turnstile, configured to check, generally remotely via an NFC technology or via a ticket reader in which the user must manually insert the ticket, possession and validity of a ticket for each individual user who approaches the turnstile. Once these requirements are verified, the turnstile opens automatically to let the authorized user pass.

Similar systems are used, for example, in stadiums to monitor user access before a sporting event or concert.

Traditionally, such access monitoring systems involve a series of drawbacks or disadvantages which cause long queues at the gates and high management costs.

For example, users are forced to wait in long queues at the ticket offices. In addition, users are required to keep the ticket in an area of the body that is easily accessible to the gate and in particular to the NFC reader. Alternatively, due to the reduced distance required by the reader to be able to read the NFC ticket correctly, once they arrive at an access point, users are forced to take out the ticket generally kept in their purse or pocket and bring it closer to the NFC reader itself. This generally slows down the flow of users through the gates, often causing long queues.

The aforementioned systems also entail significant disadvantages for the operator of the access system itself. For example, managers have to incur quite significant costs for staff involved in selling physical tickets at ticket office, in addition to the costs for physical tickets themselves. These costs are generally directly proportional to the number of people entering the monitored area. Furthermore, especially in particular cases, such as for example in access to ski resorts, there is the risk for the operator of the transfer of a ticket regularly purchased by a user to a third party, such as for example a friend or family member, who did not buy any tickets.

The present disclosure aims to make available a method and a system for monitoring user access to a monitored area which allows to overcome the drawbacks above mentioned with reference to the prior art and/or to achieve further advantages.

This is achieved through an access monitoring system and an access monitoring method as defined in the respective independent claims. Secondary characteristics and particular embodiments of the object of this disclosure are defined in the corresponding dependent claims.

This disclosure starts from the acknowledgment of the author of this disclosure, that, to avoid long queues at the gates of a monitored area and/or high management costs for the operator, it is necessary to change or improve the access monitoring systems of users traditionally used.

According to an aspect, the present disclosure relates to a method for monitoring the access of users in possession of a ticket associated with a user identification, or wherein each ticket has an identification code, in a monitored area, for monitoring the accesses that take place in a sports facility, preferably a ski resort, through an access monitoring system. This access monitoring system comprises a gate assembly which defines a passage or access, and which in turn comprises a camera, a ticket monitoring device and barrier means for said passage or access. Said barrier means are movable between a closed position of the passage and an open position of the passage. In addition, the access monitoring system includes a management unit configured to receive and send information from/to the gate assembly. The method includes a step of determining an attempt to access the gate assembly of the access monitoring system to the monitored area. This phase is carried out by the ticket monitoring device by detecting the user ID or identification code associated with the ticket of a user who approaches the gate. At this point, if a user first enters the monitored area, the method involves taking a reference picture of the user through the camera of the access monitoring system and associating the reference picture with the user ID or identification code detected by the ticket monitoring device. The reference picture associated with the user ID or identification code detected is then sent and saved in the management unit. The barrier means are then controlled in the open position of the passage so as to allow the identified user to enter the monitored area. Alternatively, in the event of user access to the monitored area after the first access, the method provides taking a monitoring picture to the user and associating this monitoring picture with the user ID or identification code detected by the ticket monitoring device. A step of comparison of the monitoring picture follows with the reference picture saved in the management unit when the user first accesses the monitored area and associated with the same user ID or identification code detected by the ticket monitoring device. In the event that these pictures match, the barrier means are controlled in the open position of the passage in order to let the identified user enter the monitored area.

It follows that, according to this aspect, the method of this disclosure provides for a double control of users who seek to enter the monitored area and consequent greater security. In particular, the comparison between the monitoring picture and the reference picture prevents a user from transferring a valid ticket to a third person, thus avoiding an unauthorized person's access to the monitored area.

According to an aspect of this disclosure, the ticket monitoring system is configured to remotely, or wirelessly, detect the user ID or identification code associated with a ticket. For example, the ticket monitoring device comprises a QR code reader and/or an NFC reader and/or an RFID reader and the ticket is configured to comprise an NFC chip and/or a QR code and/or an RFID tag. According to this aspect, the queues at the access gates of a monitored area can be reduced, as users do not have to manually insert the tickets inside a special reader to check the validity of the ticket itself.

According to a further aspect of the present invention, the use of a mobile device, preferably a smartphone, is envisaged. Preferably, the ticket is a ticket purchased online before the first access to the monitored area. Preferably, the association of the user ID or ticket identification code is carried out in a ticket generation step following a request for a user to purchase a ticket. According to a preferred aspect, this ticket is a digital ticket, saved on the mobile device, for example a smartphone, of the user. As a result, queues at the ticket office and waste due to the use of raw materials for paper ticket printing are significantly reduced. This also results in a significant saving of resources on the part of the operator, due to the lack of need for physical ticket printing and the lack of need to hire staff to physically sell tickets at the ticket offices in the monitored area.

According to an aspect of the present disclosure, the ticket monitoring device comprises a Bluetooth and/or Wi-Fi connection. Furthermore, the method comprises a step of connecting the mobile device in which a ticket is saved to the Bluetooth and/or Wi-Fi of the ticket monitoring device of the access monitoring system. Following this connection, the step of determining an attempt to access the gate assembly through the detection of the user ID or identification code is carried out by the ticket monitoring device by means of said Bluetooth and/or Wi-Fi connection. Advantageously therefore, the control of the tickets by the access monitoring system is facilitated, automatic, faster and configured to identify the user ID or identification code associated with each of the tickets of the users who approach a gate assembly at a greater distance than NFC, RFID or QR code readers. The result is therefore an advantage for users, who are no longer forced to bring the ticket closer to the access monitoring device. This allows greater fluidity of the queues at the gates of a monitored area and avoids the formation of long queues at the gates of access to a monitored area.

According to an aspect of the invention, the user identifiers of all tickets sold are saved in the management unit. According to this aspect, following the determination of an access attempt, the method envisages a step of comparison between the user identification ID or identification code detected by the ticket monitoring device and the user identifiers saved in the management unit. According to a preferred aspect, in the event of a mismatch between this user identifier or saved identification code and a user identifier or identification code saved in the management unit, access to the monitored area is denied without taking the monitoring picture or reference picture.

According to one aspect, the method object of the present disclosure is carried out for monitoring the accesses that occur repeatedly in the same area or in different areas involved with each other connected by a management communication, or a single operating management unit.

The present disclosure further relates to an access monitoring system for users in possession of a ticket in a monitored area, wherein each ticket is associated with a user ID, or wherein each ticket includes an identification code. The access monitoring system includes a gate assembly to the monitored area. This gate assembly defines a passage, or access, to the monitored area. In turn, the gate assembly includes a camera configured to photograph a user at said gate assembly, a ticket monitoring device for identifying the user ID or identification code associated with a user's ticket and barrier means, wherein said barrier means are adapted to block the passage and are movable between a closed position and an open position of the passage. The access monitoring system also includes a management unit configured to receive a picture of a user taken by the camera and an identification of a user of a ticket and to control command signals to command a movement of the barrier means from the closed position of the passage the opening position of the passage according to the information received from the management unit itself. According to this aspect, the monitoring system foresees a double control of the users who try to enter the monitored area and, consequently, a greater safety. In fact, the access monitoring system opens the barrier means not only as a function of the detection of an user ID or identification code associated with a ticket, but also as a function of information present in the management unit.

According to an aspect of the present disclosure, the management unit is configured to receive a picture of a user taken from and/or a user ID or ticket identification code detected by the ticket monitoring device.

Preferably also, the management unit is configured to associate the picture of a user with the respective user ID or ticket identification code of the same user detected by the ticket monitoring device.

According to a preferred aspect of the present disclosure, the management unit is also configured to compare the picture received by the camera with pictures previously saved in the management unit itself.

Preferably, the management unit is further configured to send a moving command to the barrier means to move said barrier means from the closed passage position to the open passage position if there is a correspondence between the picture received by the camera and a picture previously saved in the management unit.

It follows that access to the monitored area is only allowed to a user in possession of a valid ticket and previously photographed by the access monitoring system.

According to a further aspect of this disclosure, the ticket monitoring device is configured to remotely detect the user ID or identification code associated with a ticket.

Preferably, the ticket is configured to include an NFC chip and/or an RFID tag and/or a QR code. Moreover, the ticket monitoring device comprises a QR code reader and/or an NFC reader and/or an RFID reader.

According to this aspect, the queues at the access gates of a monitored area can be reduced, as users do not have to manually insert the tickets inside a special reader to check the validity of the ticket itself.

According to a further aspect of the present disclosure, the ticket is a digital ticket saved in a user's mobile device. The access monitoring system also includes a Bluetooth and/or Wi-Fi connection and a connection between the user's mobile device containing the digital ticket and the access monitoring system via that Bluetooth and/or Wi-Fi connection is configured to determine the detection of the user ID or identification code associated with the digital ticket.

The result is therefore an advantage for users, who are no longer forced to bring the ticket closer to the access monitoring device. This allows greater fluidity of the queues at the gates of a monitored area and avoids the formation of long queues at the gates of access to a monitored area.

The present disclosure also relates to a sports or ski lift facility comprising a monitoring system.

Further advantages, characteristics and methods of use of the object of the present disclosure will become clear from the following detailed description of its embodiments, presented by way of non-limiting example.

It is however evident that each embodiment of the object of the present disclosure can have one or more of the advantages listed above; in any case it is not required that each embodiment present all the listed advantages simultaneously.

Reference will be made to the figures of the attached drawings, wherein:

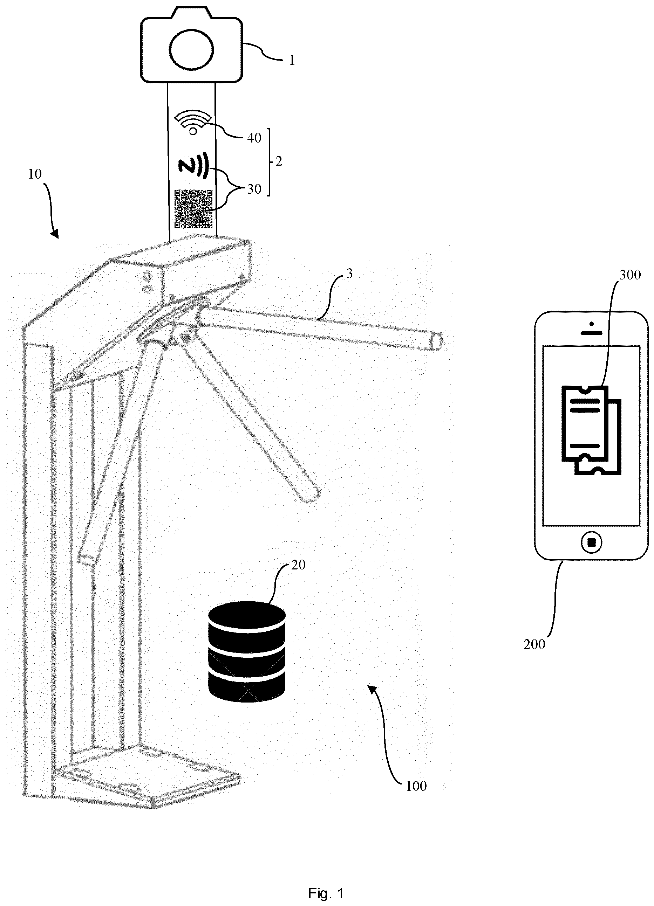

- Figure 1 represents a view of an access monitoring system according to the present invention;

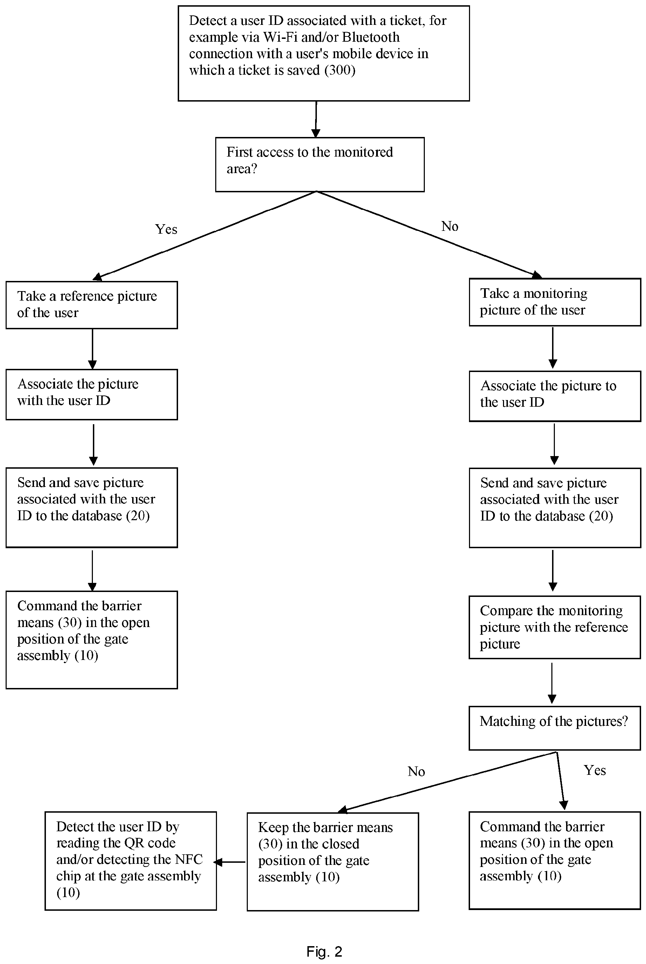

- Figure 2 illustrates a flow chart of the method according to the present invention.

The present disclosure relates to a method for monitoring user access in a monitored area and an access monitoring system in a monitored area, wherein said access monitoring system is indicated with the reference 100 in the attached figures.

The term "monitored area" refers, within the scope of this disclosure, to a limited area, such as for example a sports facility, preferably a ski facility, or a stadium, a museum to which a user can access after purchasing a ticket 300, or a season ticket, and passing through a gate assembly 10 where the presence and validity of an access ticket 300 is checked. A plurality of monitored areas can be provided each with a respective gate assembly 10. These monitored areas are then managed and operationally connected to each other, for example by a single management unit or are part of a single management system.

Preferably, the method and the system object of the present disclosure are applicable for the monitoring of accesses that occur repeatedly in the same monitored area, or group of monitored areas. As mentioned, the method can also be carried out for access monitoring in different monitored areas connected to each other by a single manager, or a single operating management unit. In particular, according to an aspect of the present disclosure, multiple monitored areas managed by a single manager may be present. According to this aspect, the gate assembly allows access to different monitored areas that are operationally connected to each other, or under the control of the same manager or owner. A typical example is that of the ski resorts that are part of a single ski area.

As part of the present disclosure, monitoring of access in this monitored area is carried out by means of an access monitoring system 100 comprising a gate assembly 10 of access to the monitored area, in which the access monitoring system 100 is configured to verify that every user who tries to pass through said gate assembly 10 is in possession of a valid ticket 300.

According to the present invention, a user ID or identification code is associated with each ticket or season ticket 300. Preferably, this association takes place during the generation of the ticket following a request for the purchase of a ticket 300 by a user. Even more preferably, all the user identifiers associated with the generated tickets 300 are saved in a management unit 20 of the access monitoring system 100. According to a preferred embodiment, each ticket or season ticket 300 has a limited-time validity and is configured to include an NFC chip and/or an RFID tag and/or a QR code. Even more preferably, the tickets 300 are digital tickets saved each in a mobile device, for example in a smartphone, of the user who purchased the ticket 300. Furthermore, preferably, this ticket 300 is purchased online, for example through a special application for smartphones, paying for example with previously registered credit card, before accessing the monitored area.

As previously anticipated, the access monitoring system 100 comprises a gate assembly 10 through which a user must pass to enter the monitored area.

The gate assembly 10 defines a passage, or an access, to the monitored area, is for example a turnstile or a similar element comprising barrier means 3. Said barrier means 3 are normally arranged in a position for closing the passage, so that no one can cross the passage without first having validated their ticket 300. The barrier means 3 are movable between said closed passage position and an opening position of the passage by means of a system for moving the barrier means 3.

The gate assembly 10 preferably comprises a camera 1 configured to photograph a user who is about to cross said gate assembly 10. Preferably, said camera 1 is a camera device, preferably of a digital type, with high resolution configured for the recognition of somatic features of users who are about to cross the passage of the gate assembly 10. According to a preferred embodiment, this camera 1 is configured to recognize somatic features such as: color and type of clothes, height, presence of helmets or hats, the presence of glasses and/or scarves and other visual characteristics, such as the build of a user. This device therefore allows the recognition of users while ensuring, at the same time, respect for users' privacy. The access monitoring system 100 further comprises a ticket monitoring device 2. The ticket monitoring devices 2 traditionally comprise a bar code reader present in the ticket 300. Preferably, the ticket monitoring device 2 is configured to remotely detect a user ID or identification code associated with a ticket 300. For example, the ticket monitoring device 2 comprises a reader 30 configured to detect a QR code present in the ticket 300. Alternatively or in combination, the ticket monitoring device 2 comprises a reader 30 configured to detect an NFC chip and/or a an RFID tag on ticket 300.

Even more preferably, the ticket monitoring device 2 of the access monitoring system 100 comprises a Bluetooth and/or Wi-Fi connection so that the access monitoring system 100 can communicate with users' mobile devices 200 via said connections. According to this aspect, a user in possession of a digital ticket 300 saved in a mobile device 200 is required to make a first connection and/or registration to the Bluetooth and/or Wi-Fi network of the access monitoring system 100, in particular of the ticket monitoring device 2 of the access monitoring system 100. Preferably, subsequent connections to the Bluetooth and/or Wi-Fi of the ticket monitoring device 2 take place automatically. According to a preferred embodiment, a connection between a user's mobile device 200 on which a ticket 300 is saved and the ticket monitoring device 2 by means of said Bluetooth and/or Wi-Fi connection 40 is configured to determine the detection of the user ID or identification code associated with said ticket 300 by the ticket monitoring device 2.

The access monitoring system 100 further comprises a management unit 20 configured to receive and send information from/to the gate assembly 10. Preferably, the management unit 20 is configured to send and receive information from/to the monitoring device 2 of the tickets and/or from/to the camera 1 and/or from/to the movement system of the barrier means 3 of the gate assembly 10. Specifically, the management unit 20 is configured to receive information of the user and/or of the user's ticket 300 from the ticket monitoring device 2 and from the camera 1 and send commands for opening or closing the barrier means 3 to the movement system of the barrier means 3. According to a preferred embodiment, the management unit 20 is configured to receive the picture of a user taken by the camera 1 and associate said picture with the respective user ID or identification code of the ticket 300 of the same user detected by the ticket monitoring device 2. Furthermore, according to a further aspect, the management unit 20 is further configured to compare a picture received by the camera 1 with pictures previously saved in the management unit 20 itself. According to a preferred embodiment, the movement system of the barrier means 3 is configured to move said barrier means 3 from the closed position of the passage of the gate assembly 10 to the open position of the passage of the gate assembly 10 if there is a correspondence between a picture received by the camera 1 and a picture previously saved in the management unit 20. Preferably furthermore, the management unit 20 is positioned at a distance with respect to said gate assembly 10.

The method of this disclosure involves a step of determining an attempt to access the gate assembly 10 of the access monitoring system 100 of the monitored area. According to a preferred embodiment, an attempt by a user in possession of a ticket 300 to access the gate assembly 10 is determined by the monitoring device 2 detecting the user ID or identification code associated with the ticket 300. For example, this access attempt corresponds to the reading by the ticket monitoring device 2 of a bar code and/or of an RFID tag present in the ticket 300. According to a preferred embodiment, the ticket monitoring device 2 is configured to remotely detect the user ID or identification code associated with a ticket 300. For example, remote detection of the user ID or identification code associated with a ticket 300 is carried out by the ticket monitoring device 2 by means of a scanning a QR code and/or reading an NFC chip present in the ticket 300 by means of a specific reader 30 of a QR code and/or an NFC chip. Even more preferably, in the case in which the access monitoring system 100 comprises a Bluetooth and/or Wi-Fi connection 40 and when the ticket 300 is a digital ticket saved in a mobile device, the detection of the user ID takes place by means of this connection 40 Bluetooth and/or Wi-Fi. Preferably, in the case of a first access of a user to the monitored area, the detection of the user ID or identification code associated with the ticket 300 by the ticket monitoring device 2 is carried out by an NFC reader and/or a QR code reader which detects an NFC chip and/or scans a QR code present in the ticket 300. Even more preferably, in the case of a user accessing the monitored area following said first access, or in any subsequent user access to the monitored area, the identification of the user identification or identification code takes place through the connection 40 between the mobile device 200 in which a digital ticket 300 is saved and the Bluetooth and/or Wi-Fi of the access monitoring system 100. In other words, the approaching a user to the gate assembly 10 causes the mobile device 200 to connect, preferably automatically, to the system's Bluetooth and/or Wi-Fi connection 40 access monitoring system 100. This connection notifies the gateway 10 of the user's next arrival and allows the detection of the user ID or identification code associated with the user's digital ticket 300.

Once the access monitoring system 100 has detected the user ID or identification code associated with a user's ticket 300, the access monitoring system 100 requires the fulfillment of a second requirement before moving the barrier means 3 of the gate assembly 10 in an open position.

In the event that a user holding a ticket 300 attempts to access the monitored area for the first time, the access monitoring system 100 takes a reference picture, or a first picture, through camera 1, of the user at the gate assembly 10. The access monitoring system 100 also associates said reference picture, or first picture, of the user with the user ID or identification code associated with the user's ticket 300 detected by the monitoring device 2. In addition, the access system 100 sends and saves said reference picture associated with said user ID or identification code in the management unit 20.

Once the reference picture associated with the respective user ID or identification code is saved, the access monitoring system 100 controls the movement of the barrier means 3 from the closed position of the passage of the gate assembly 10 to the open position of the passage of the gate assembly 10, so that the user can enter the monitored area.

If instead the user enters the monitored area after the first access, once the attempt to access the gate assembly 10 has been determined by detecting the user ID or identification code associated with the ticket 300 of the user who approaches to the gate assembly 10, the access monitoring system 100 takes a monitoring picture, or second picture, through the camera 1, of the user at the gate assembly 10. The access system 100 also associates said monitoring picture, or second picture, of the user to the user ID or identification code detected by the monitoring device 2 associated with the user's ticket 300.

The method further comprises a comparison step between the monitoring picture and the reference picture saved in the management unit 20. This comparison step is carried out by the access monitoring system 100 and is simplified since both the pictures are associated with the same user ID or identification code.

Finally, in case of correspondence between the monitoring picture and the reference picture, the access monitoring system 100 controls the movement of the barrier means 3 from the closed position of the passage to the open position of the passage, so that the user can enter the monitored area.

It follows that, according to an aspect of the present disclosure, in the case of an attempt by the user to enter the monitored area after the first access, the ticket monitoring device 2, the camera 1 and the management unit 20 are configured to cooperate in such a way that each user must be doubly identified before being able to access the monitored area. In other words, the gate assembly 10 allows a user to enter the monitored area only if the ticket monitoring device 2 has detected, preferably by means of the Bluetooth and/or Wi-Fi connection, a valid user ID or identification code associated with a ticket 300 and, preferably at the same time, the user's monitoring picture corresponds with a reference picture previously taken. According to this aspect, therefore, the double identification ensures a user's access to the monitored area only when it has been verified that the user actually has a valid ticket 300 at the time of access and that the latter belongs to the same user who bought it. In other words, dual identification ensures that users cannot exchange a valid 300 ticket to one other. In other words, the double identification allows entry to the monitored area only to users who are the legitimate owners of a valid 300 ticket.

Moreover, preferably, at each determination of an attempt by a user to access the monitored area, the method comprises a step of comparison between the user ID or identification code associated with the ticket 300 of the user who tries to enter the monitored area detected by the ticket monitoring device 2 and the user ID saved in the management unit 20. In the event of a mismatch between said user IDs, access to the monitored area is denied without taking the reference picture or the monitoring picture, and the means barrier 3 remain in a closed position of the passage.

According to a further aspect, the method further comprises a step of delating the pictures and/or user IDs associated with the tickets 300 generated by the management unit 20. Preferably, this step is carried out at the end of the validity of the tickets 300. For example, in the event that the tickets are valid for one day, at the end of the day, the access monitoring system 100 deletes all the pictures and/or user IDs saved in the management unit 20.

In general, therefore, according to a preferred embodiment of this disclosure, a user intending to enter the monitored area buys a ticket 300, preferably online in a specific application, by paying with a previously registered credit card. When the ticket 300 is generated, the access monitoring system 100 automatically associates a user ID or identification code with the user's ticket 300 purchased. This user ID or identification code can be registered, for example, in an NFC chip or in a QR code. Furthermore, preferably, the ticket 300 purchased is a digital ticket which is saved in an application of a mobile device 200 of the user, so that the user ID or identification code associated with said ticket 300 is detectable by the access monitoring system 100 via a Bluetooth and/or Wi-Fi connection of the ticket monitoring device 2 of the access monitoring system 100 itself.

When the user approaches the gate 10 of the monitored area, in the case of first access to the monitored area, the user brings the ticket 300 closer to the ticket monitoring device 2. In the event that ticket 300 is a digital ticket, the ticket monitoring device 2 detects the user ID or identification code associated with the ticket 300 through of an NFC reader and/or by reading a QR code associated with the ticket. Subsequently, the ticket monitoring device 2 of the access monitoring system 100 takes a first picture, or reference picture and saves said first picture, together with the user identifier or identification code associated with the ticket, in the management unit 20. Subsequently, the access monitoring system 100 controls the barrier means 3 of the gate assembly 10 in the open position of the passage. Furthermore, preferably, during this first access, the user connects and/or registers his mobile device 200 with the Bluetooth and/or Wi-Fi connection of the ticket monitoring device 2 of the access monitoring system 100. Preferably, following this first connection, subsequent connections to Bluetooth and/or Wi-Fi will be automatic.

In the event of subsequent access to said first access to the monitored area, the user's mobile device 200 on which the ticket is saved 300 connects via Bluetooth and/or Wi-Fi to the access monitoring system 100 and the monitoring device 2 of the tickets identifies the user ID or identification code associated with the ticket 300 of the user saved in said mobile device 200. The access monitoring system 100 is therefore aware of all the users who are about to approach again the gate assembly 10 of the monitored area. When the user arrives close to the gate assembly 10, the ticket monitoring device 2 of the access monitoring system 100 takes a second picture, or monitoring picture, through camera 1, to the user. This second picture is sent, together with the user identifier or identification code detected by the ticket monitoring device 2 to the management unit 20. The access monitoring system 100 compares the second picture with the first picture associated with the same user identifier or code identification and, in the case of correspondence between the two picture, controls the barrier means 3 of the gate assembly 10 in the open passage position. In the case of a mismatch between the monitoring picture and the reference picture, the barrier means 3 remain in the closed position of the passage and the user must contact an operator of the access monitoring system 100. Alternatively, a user whose access to the monitored area is denied can identify himself to the access monitoring system 100, for example by scanning a QR code or an NFC chip contained in the ticket 300 by means of a reader 30 of the ticket monitoring device 2.

According to an aspect of this disclosure, the user can be uniquely identified through other technologies. In particular, the user can be identified by scanning biometric parameters, such as the distribution of colors, for example of the clothes he wears, or by measuring user parameters such as height, width or depth of the user himself.

It follows that the picture according to this disclosure can be intended as a picture both in the strict sense and in the broad sense as a scan, for example a scan of biometric parameters, or a scan that allows you to identify colorimetric or user size parameters.

Accordingly, also the camera according to the present disclosure can be a camera in the strict sense or a scanner or other instrumentation for carrying out a given scan. In other words, the term picture can mean a picture in the strict sense or a scan in a broader sense, and similarly applies to the picture acquisition tool.

It is also possible to provide a 3D radar scan of the user at the access point and the creation, through a specific computer program, of a 3D model of the user. Picture can be as intended as a 3D radar scan.

Again, in combination or alternatively, an IR scan of the user can be performed to detect a specific thermal impression of the user himself. Through this scan it is possible to detect specific user constant thermal sources, i.e. that do not vary with the variation of the ambient temperature. Picture can therefore be understood as a thermal scan, i.e. an IR scan.

According to these aspects, the access monitoring system 100 includes suitable means for scanning the user according to one or more of the methods described above.

Consequently, furthermore, according to these aspects, the access monitoring method provides for the user to be scanned according to one or more of the technologies mentioned above, possibly in combination with the picture in the strict sense. In this case, the management unit 20 is configured to compare subsequent user scans carried out using one or more of the aforementioned technologies. In particular, in the event of a correspondence between the user's scanning which took place at the first access of this user to the monitored area and the scanning which occurred at a subsequent access to the first, the barrier means 3 are commanded in the open position.

The object of the present disclosure has been so far described with reference to its embodiments. It is to be understood that other embodiments may exist which pertain to the same inventive core, all of which are within the scope of protection of the claims set out below.

## Claims

1. Method for monitoring access of users in possession of a ticket (300) in a monitored area for access monitoring in a sports facility, preferably a ski area, through an access monitoring system (100) to monitor the access in the monitored area, wherein each ticket (300) is associated with a user ID, or wherein each ticket has an identification code, and wherein said access monitoring system (100) comprises a gate assembly (10) which defines a passage or access, wherein said gate assembly (10) includes:
- a camera (1),
- a ticket monitoring device (2) and
- barrier means (3) movable between a closing position of the passage and an opening position of the passage or access,
the access monitoring system (100) further comprising a management unit (20) configured to receive and send information from/to said gate assembly (10); the method comprising the steps of:
- determining an attempt to access the gate assembly (10) of the access monitoring system (100) of the monitored area by detecting the user ID associated with the ticket (300) of a user approaching the gate (10) via the ticket monitoring device (2);
- in case of a first access by a user in the monitored are:
∘ taking, through said camera (1), a reference picture of the user, associating said reference picture with the user ID detected by the ticket monitoring device (2) and saving said reference picture associated with the user ID in the management unit (20);
∘ controlling said barrier means (3) in the opening position through a system for moving said barrier means (3);
- in case of an access of the user in the monitored area successive to said first access:
∘ taking, through said camera (1), a monitoring picture of the user and associating said monitoring picture with the user ID detected by the ticket monitoring device (2);
∘ comparing said monitoring picture and said reference picture saved in the management unit (20) and associated with the same user ID;
∘ in case of matching between the monitoring picture and the reference picture, controlling said barrier means (3) in the opening position through a system for moving said barrier means (3)
wherein the use of a mobile device (200), preferably a smartphone, is provided, wherein the ticket (300) is a digital ticket saved in the mobile device (200), wherein the ticket monitoring device (2) is configured to remotely or wirelessly detect the user ID associated with a ticket (300) and wherein the ticket monitoring device (2) comprises a Bluetooth and/or Wi-Fi connection (40) and wherein the method comprises a step of connecting the mobile device (200) in which a ticket (300) is saved to the Bluetooth and/or Wi-Fi of the ticket monitoring device (2), wherein the step of determining an attempt to access the gate assembly (10) of the access monitoring system (100) through the identification of the user ID is carried out by the ticket monitoring device (2) by means of said Bluetooth and/or Wi-Fi connection (40).

2. Method according to the preceding claim, wherein the ticket (300) comprises an NFC chip and/or an RFID tag and/or a QR code and wherein the ticket monitoring device (2) comprises a reader (30) configured for detect a QR code and/or an NFC chip and/or an RFID tag.

3. Method according to anyone of the preceding claims, wherein the ticket (300) is purchased online by a user before the first access to the monitored area, wherein the association of the user ID to the ticket (300) is carried out in a ticket generation phase (300) following a request to purchase a ticket (300) from a user.

4. Method according to any one of the preceding claims, wherein the user IDs of the tickets (300) sold are saved in the management unit (20) and wherein, following the determination of an attempt to access, the method further comprises a phase of comparison between the user ID detected by the ticket monitoring device (2) and the user IDs saved in the management unit (20).

5. Method according to the preceding claim, wherein, in the event of a mismatch between a user ID detected by the ticket monitoring device (2) and the IDs saved in the management unit (20), access to the monitored area is denied without taking the reference picture or the monitoring picture.

6. Method according to any one of the preceding claims, which is carried out for the monitoring of accesses that occur repeatedly in the same area or in different monitored areas connected to each other by a single management, or single operating management unit.

7. Method according to any one of the preceding claims, wherein the picture is a scan, for example a scan of biometric parameters, or a scan which allows to identify colorimetric or size parameters of the user and the camera is a respective instrumentation for performing said scan.

8. Method according to anyone of the preceding claims from 1 to 6, wherein the picture is a 3D radar scan and the camera is a respective 3D radar scan instrumentation.

9. Method according to any of the preceding claims from 1 to 6, wherein the picture is an IR scan of the user to detect a specific thermal signature of the user himself and the camera is a respective instrumentation for performing said scan.

10. Method according to any one of the preceding claims, wherein the picture is an image of the user, in possible combination with a scan which allows to identify colorimetric or size parameters of the user, a 3D radar scan and an IR scan of the user to detect a specific thermal signature of the user himself, or a combination of said scans.

11. Access monitoring system (100) of users in possession of a ticket (300) in a monitored area where each ticket (300) is associated with a user ID, or wherein each ticket has an identification code, wherein said access monitoring system comprises a gate assembly (10) for accessing the monitored area, said gate assembly defining a passage or access and comprising:
- a camera (1) configured to take a picture of a user at said gate assembly (10),
- a ticket monitoring device (2) configured to detect said user ID associated with a ticket (300) and
- barrier means (3) able to block the passage and to move between a closing position and an opening position,
the access monitoring system (100) comprising a management unit (20) configured to receive a picture of a user taken by said camera (1) and a user ID of a ticket (300), and to process control signals to control a movement of said barrier means (3) from the closing position of the passage to the opening position of the passage or vice versa according to the information received from the management unit (20) from the camera (1) and from the monitoring device (2), wherein the ticket (300) is a digital ticket saved in a mobile device (200) of a user and wherein the monitoring device (2) of the tickets of the access monitoring system (100) comprises a Bluetooth and/or Wi-Fi connection (40), wherein a connection between said mobile device (200) and the ticket monitoring device (2) of the access monitoring system (100) through said Bluetooth and/or Wi-Fi connection (40) is configured to determine the detection of the user ID associated with said digital ticket (300).

12. Access monitoring system (100) according to the preceding claim, wherein the management unit (20) is configured to associate the picture of a user taken by the camera (1) with the respective user ID of the ticket (300) of the same user detected from the ticket monitoring device (2).

13. Access monitoring system (100) according to the preceding claim, wherein the management unit (20) is further configured to compare the picture received by the camera (1) with pictures previously saved in the management unit (20) itself and wherein the management unit (20) is further configured to control moving the barrier means (3) to move said barrier means (3) from the closing position of the passage to the opening position of the passage in the event of a matching between a picture received by the camera (1) and a picture previously saved in the management unit (20).

14. Access monitoring system (100) according to any of the claims from 7 to 9, wherein the ticket monitoring device (2) is configured to remotely detect a user ID associated with a ticket (300) and/or wherein a ticket (300) is configured to comprise an NFC chip and/or an RFID tag and/or a QR code and wherein the ticket monitoring device (2) comprises a reader (30) configured to detect a QR code and/or a NFC chip and/or an RFID tag.

15. Access monitoring system according to any one of the preceding claims from 11 to 14, wherein the picture is a user image or a scan, for example a scan of biometric parameters, or a scan which allows to identify colorimetric or size parameters or a 3D radar scan, or an IR scan of the user to detect a specific thermal signature of the user, or a combination thereof.

16. Sports or ski lift system including a monitoring system according to any of the claims from 11 to 15.
